# EUROPÄISCHE PATENTSCHRIFT

(11) **EP 3 079 927 B1**
(45) Veröffentlichungstag und Bekanntmachung des Hinweises auf die Patenterteilung: **09.08.2017**
(21) Anmeldenummer: 14806254.0
(22) Anmeldetag: 02.12.2014
(51) Int. Cl.: B60G 7/02, B29C 65/48, B62D 65/12, B62D 21/11, B62D 29/00, F16F 1/373

(54) **ANORDNUNG AUS EINEM RAHMENELEMENT UND EINEM VERBINDUNGSELEMENT SOWIE VERFAHREN ZUR BEFESTIGUNG EINES VERBINDUNGSELEMENTES AN EINEM RAHMENELEMENT**
ASSEMBLY COMPRISING A FRAME ELEMENT AND A CONNECTING ELEMENT, AND METHOD FOR SECURING A CONNECTING ELEMENT TO A FRAME ELEMENT
ENSEMBLE COMPOSÉ D'UN ÉLÉMENT DE CHÂSSIS ET D'UN ÉLÉMENT D'ASSEMBLAGE ET PROCÉDÉ POUR FIXER UNE ÉLÉMENT D'ASSEMBLAGE À UN ÉLÉMENT DE CHÂSSIS

(30) Priorität: 13.12.2013 DE 102013225905
(43) Veröffentlichungstag der Anmeldung: 19.10.2016
(73) Patentinhaber: Bayerische Motoren Werke Aktiengesellschaft, 80809 München (DE)
(72) Erfinder: STEBER, Gerhard, 80796 München (DE); KELLER, David, 80638 München (DE); KEMPF, Juergen, 81667 München (DE); KOLK, Olaf, 85391 Allershausen (DE); MARMODEE, Christian, 81827 München (DE)
(86) Internationale Anmeldenummer: PCT/EP2014/076256
(87) Internationale Veröffentlichungsnummer: WO 2015/086379

(56) Entgegenhaltungen:
- EP-A1- 0 155 088
- EP-A2- 0 637 520
- EP-A2- 2 527 231
- WO-A1-01/64570
- WO-A1-2011/035860
- WO-A1-2013/160208
- WO-A1-2014/029539
- WO-A1-2014/029541
- DE-A1- 19 713 043
- DE-A1-102011 085 383
- FR-A1- 2 678 883

## Beschreibung

Die Erfindung betrifft eine Anordnung aus einem Rahmenelement eines Kraftfahrzeuges und einem zur Anbindung eines Bauteils vorgesehenen Verbindungselementes sowie ein Verfahren zur Befestigung des Verbindungselementes an dem Rahmenelement.

Eine derartige Anordnung aus einem Rahmenelement eines Kraftfahrzeuges und einem zur Anbindung eines Bauteils vorgesehenen Verbindungselement ist beispielsweise aus der DE 10 2011 085383 A1 bekannt. Weiterer Stand der Technik wird durch die WO 2011/035860 A1, EP 2 527 231 A2, WO 2013/160208 A1, EP 0 155 088 A1, EP 0 637 520 A2, DE 197 13 043 A1 und WO 01/64570 A1 gebildet

In der Automobilindustrie werden bei der Herstellung von Kraftfahrzeugen verschiedene Teilabschnitte des Kraftfahrzeuges durch entsprechende Rahmenkonstruktionen aufgebaut. Zu solchen Rahmenkonstruktionen zählt beispielsweise das Fahrwerk der meisten Kraftfahrzeuge.

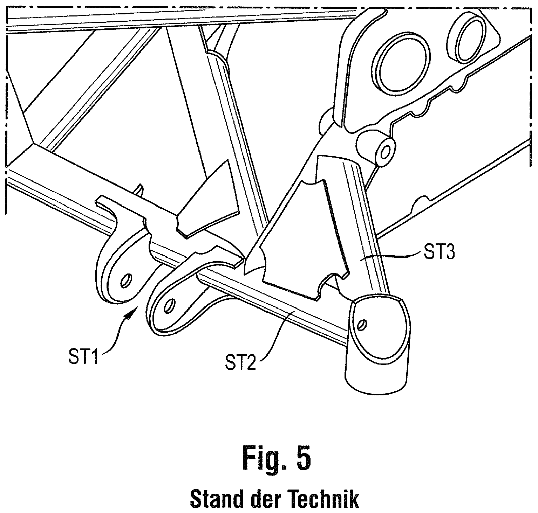

Fig. 5 zeigt einen Teilabschnitt eines für ein Kraftfahrzeug vorgesehenen Fahrwerks bzw. einer entsprechenden Rahmenkonstruktion. An der Rahmenkonstruktion ist eine Anbindungsstelle ST1 ausgebildet, die zwei parallel verlaufende Anbindungsabschnitte mit jeweils einer Durchgangsöffnung aufweist. An dieser Anbindungsstelle ST1 wird ein Lenker einer Radaufhängung über eine durch die Durchgangsöffnungen verlaufenden Schraubverbindung befestigt.

Die in Fig. 5 gezeigte Rahmenkonstruktion ist eine Metallkonstruktion, die aus einzelnen Rahmenelementen ST2, ST3 etc. aufgebaut ist.Die Anbindungsstelle ST1 ist an dem Rahmenelement ST2 beispielsweise durch eine Schweißverbindung befestigt. Während des Betriebes des Fahrzeuges werden über die Anbindungsstelle ST2 Kräfte in die in Fig. 5 gezeigte Rahmenkonstruktion eingeleitet.

Heutzutage besteht aus Gründen der Gewichtsersparnis in der Automobilindustrie die Tendenz dazu, solche Rahmenkonstruktionen, insbesondere auch im Fahrwerksbereich, aus faserverstärkten Kunststoffen zu fertigen. Bei solchen aus faserverstärkten Kunststoffen hergestellten Rahmenkonstruktionen werden die Anbindungsstellen entweder durch Klebeverbindungen und/oder Schraubverbindungen an dem entsprechenden Rahmenelement befestigt.

Für die Schraubverbindungen ist es notwendig, in dem aus einem faserverstärkten Kunststoff ausgebildeten Rahmenelement entsprechende Durchgangsöffnungen vorzusehen, wobei es hierbei zur Durchtrennung von Fasern und damit zu einer Schwächung des faserverstärkten Kunststoffes kommt. Die entsprechenden Bereiche des Rahmenelementes müssen folglich materialmäßig stärker ausgebildet oder durch zusätzliche Elemente verstärkt werden.

Bei der alternativen Befestigungsmöglichkeit der Anbindungsstelle über einen Klebstoff müssen hingegen große über den Klebstoff verbundene Flächen vorgesehen werden, damit die Klebstoffverbindung bei bestimmungsgemäß wirkenden Kräften nicht reißt.

Vor diesem Hintergrund ist es Aufgabe der Erfindung, eine Anbindungsstelle bzw. eine Anordnung aus einem Rahmenelement eines Kraftfahrzeuges und einem zur Anbindung eines Bauteils vorgesehenen Verbindungselementes zu schaffen, die gute Stabilitätseigenschaften aufweist und einfach ausgebildet werden kann.

Diese Aufgabe wird mit einer Anordnung gemäß Anspruch 1 und einem Verfahren gemäß Anspruch 13 gelöst. Bevorzugte Ausführungsformen der Erfindung sind Gegenstand der Unteransprüche.

Gemäß der vorliegenden Erfindung wird eine Anordnung aus einem Rahmenelement eines Kraftfahrzeuges, beispielsweise aus einem Rahmenelement eines Fahrwerkes eines Kraftfahrzeuges, und einem zur Anbindung eines Bauteils, wie beispielsweise einem zu einer Radaufhängung gehörenden Lenker, vorgesehenen Verbindungselement dadurch ausgebildet, dass das Verbindungselement an dem Rahmenelement durch eine Faserwickelung befestigt ist.

Durch die Ausbildung der Faserwickelung ist es nicht notwendig, Durchgänge für Schraubverbindungen in dem Rahmenelement vorzusehen, weshalb es folglich auch zu keiner materialmäßigen Schwächung des Rahmenelementes kommt.

In Abhängigkeit von der auf das Verbindungselement bestimmungsgemäß aufgebrachten Kraft bzw. der in das Rahmenelement bestimmungsgemäß einzuleitenden Kraft und dem hieraus resultierenden Kraftfluss kann die Faserwickelung dadurch ausgebildet werden, dass eine Faser derart um das Rahmenelement und das Verbindungselement gewickelt wird, dass entsprechende Faserabschnitte der Faser parallel zueinander oder gekreuzt in Richtung des resultierenden Kraftflusses verlaufen.

Hierdurch können für verschiedene Kraftflusswege Faserwickelungen geschaffen werden, die für eine gute Befestigung des Verbindungselementes an dem Rahmenelement und damit für eine gute Krafteinleitung sorgen.

Materialmäßig kann die die Faserwickelung ausbildende Faser beispielsweise eine Kohlenstofffaser, eine Glasfaser, eine Aramidfaser, eine Keramikfaser, eine Borfaser, Basaltfaser oder eine Stahlfaser sein.

Die Faserwickelung bzw. die entsprechende Faser kann in einer Matrix eingebettet sein. Bei dieser Matrix kann es sich beispielsweise um einen Duroplast oder auch um einen Thermoplast handeln. Beispiele für Duroplasten sind Epoxidharz, ungesättigtes Polyesterharz, Vinylesterharz, Phenol-Formaldehydharz, Diallylphthalatharz, Methacrylatharz, Polyurethan, Aminoharze, Melaminharz, Harnstoffharz, und Beispiele für Thermoplasten sind Acrylnitril-Butadien-Styrol, Polyamide, Polylactat, Polymethylmethacrylat, Polycarbonat, Polyethylenterephthalat, Polyethylen, Polypropylen, Polystyrol, Polyetheretherketon, Polyvinylchlorid, Polyphenylensulfid, Polysulfon, Polyetherimid und Polytetrafluorethen.

Die Faserwickelung kann aus einer eine bestimmte Länge aufweisenden einzelnen Faser oder auch aus mehreren solcher einzelnen Fasern ausgebildet sein. Das heißt, dass beispielsweise eine Faser in einer Richtung um das Verbindungselement und das Rahmenelement gewickelt wird und eine weitere Faser in der gleichen Richtung oder einer hierzu unterschiedlichen Richtung wiederum um das Verbindungselement und das Rahmenelement gewickelt wird. Die verschiedenen die Faserwickelung ausbildenden Fasern können aus gleichen oder unterschiedlichen vorgenannten Materialien ausgebildet sein.

Das Verbindungselement ist bestimmungsgemäß dafür vorgesehen, ein Bauteil, wie z.B. einen Lenker einer Radaufhängung, an das Rahmenelement anzubinden. Hierfür kann das Verbindungselement beispielsweise Durchgangsöffnungen für eine Schraubverbindung aufweisen.

Materialmäßig kann das Verbindungselement aus einem faserverstärkten Kunststoff ausgebildet sein, bei dem eine Verstärkungsfaser oder Verstärkungsfasern in eine Matrix aus einem Duroplast oder auch einem Thermoplast eingebettet ist. Bezüglich Beispiele für geeignete Duroplasten und Thermoplasten wird auf die bereits genannten Duroplasten und Thermoplasten verwiesen. Die eingebettete(n) Verstärkungsfaser(n) können verschiedene Längen aufweisen, d.h. Kurz-, Lang- oder Endlosfasern sein. Kurzfasern liegen in einem Längenbereich von 0,1 bis 1 mm, Langfasern in einem Bereich von 1 bis 50 mm und Endlosfasern in einem Längenbereich von >50 mm.

Sollte das Verbindungselement aus Metall ausgebildet sein, handelt es sich bevorzugt um eine Fräs-, Guss- oder Schweißkonstruktion.

Insbesondere werden bevorzugt zumindest Kanten, an denen die Faserwickelung verläuft, abgerundet und/oder entgratet, damit keine Gefahr einer Beschädigung der Faser besteht.

Das Rahmenelement kann aus einem Metall oder einem Kunststoff, beispielsweise aus einem faserverstärken Kunststoff, gebildet sein.

In einer bevorzugten Ausgestaltung der erfindungsgemäßen Anordnung erstreckt sich das Rahmenelement in einer Längsrichtung, weist das Verbindungselement einen sich quer zu der Längsrichtung erstreckenden Anbindungsabschnitt zur Anbindung des Bauteiles auf, und ist die Faserwickelung derart ausgestaltet, dass sie um den Anbindungsabschnitt verläuft.

Allgemein kann die Faserwickelung derart hergestellt sein, dass die die Faserwickelung ausbildende Faser senkrecht zu der Längsrichtung verläuft. Ist die Faserwickelung aus mehreren einzelnen Fasern aufgebaut, ist es auch möglich, dass die einzelnen Fasern sich kreuzen. D.h. die Faser(n) können geodätische Linien bilden, die Punkte verbinden, die bezüglich der Längsrichtung auf gleicher Höhe liegen oder versetzt zueinander sind.

Diese Ausgestaltung ist insbesondere dann vorteilhaft, wenn in der Richtung quer zu der Längsrichtung, in der sich der Anbindungsabschnitt erstreckt, Zug- und Druckkräfte auftreten, die über den Anbindungsabschnitt bzw. das Verbindungselement in das Rahmenelement eingeleitet werden.

In einer bevorzugten Ausgestaltung der erfindungsgemäßen Anordnung weist das Verbindungselement eine Außenoberfläche auf, auf der die Faserwickelung verläuft, wobei das Verbindungselement derart ausgestaltet ist, dass die Außenoberfläche des Verbindungselementes mit einer Außenoberfläche des Rahmenelementes bündig ist.

Allgemein sind das Verbindungselement und das Rahmenelement so aufeinander angepasst, dass zwischen ihnen ein Formschluss besteht. Hierdurch wird sichergestellt, dass es bei der Aufbringung einer bestimmungsgemäßen Kraft auf das Verbindungselement bzw. bei der Einleitung einer bestimmungsgemäßen Kraft in das Rahmenelement zu keinem Verdrehen des Verbindungselementes bezüglich des Rahmenelementes kommt.

Beispielsweise besteht die Möglichkeit, dass das Rahmenelement einen quer zu der Längsrichtung verlaufenden Querschnitt aufweist, der einerseits kreisbogenförmig und andererseits linienförmig ist. Das heißt, dass in diesem Bereich das Rahmenelement einerseits einen ebenen Flächenabschnitt und einen sich hieran anschließenden kreisbogenförmigen Flächenabschnitt aufweist. Das Verbindungselement wird insbesondere an den ebenen Flächenabschnitt des Rahmenelementes so in Anlage gebracht, dass die Außenoberfläche des Verbindungselementes, auf der die Faserwickelung verläuft, mit dem kreisbogenförmigen Abschnitt des Rahmenelementes bündig ist. Hierdurch wird erreicht, dass ein stetiger Übergang zwischen der Außenoberfläche des Verbindungselementes und der Außenoberfläche des Rahmenelementes vorliegt und die Faserwickelung folglich über keine kantigen Übergänge zwischen dem Verbindungselement und dem Rahmenelement verläuft.

Weiterhin wird das Verbindungselement bevorzugt so ausgestaltet, dass es abgerundete bzw. entgratete Kanten aufweist, damit eine Beschädigung der Faserwickelung durch die Kanten des Verbindungselementes vermieden wird.

In einer bevorzugten Ausgestaltung der erfindungsgemäßen Anordnung ist der Anbindungsabschnitt aus einem ersten Teilelement und einem zweiten Teilelement ausgebildet, die derart zusammengesetzt sind, dass sie das Rahmenelement zwischen sich einschließen. Die Faserwickelung verläuft um das erste und das zweite Teilelement.

Das erste Teilelement und das zweite Teilelement sind bevorzugt so ausgestaltet, dass sie in dem zusammengesetzten Zustand eine gemeinsame stetige Außenoberfläche bilden. Durch diese Ausgestaltung wird sichergestellt, dass die Faser der Faserwickelung einen geraden Verlauf aufweist und an keinen scharfen Kanten anliegt. Zusätzlich können die entsprechenden Kanten des ersten und zweiten Teilelementes abgerundet sein, damit eine Beschädigung der Faserwickelung in dem Bereich, in dem das erste und das zweite Teilelement zusammengesetzt sind, vermieden wird.

In einer bevorzugten Ausgestaltung der erfindungsgemäßen Anordnung erstreckt sich das Rahmenelement in einer Längsrichtung, wobei das Verbindungselement einen Auflageabschnitt aufweist, der an eine Außenoberfläche des Rahmenelementes angepasst ist und von dem sich ein Anbindungsabschnitt zur Anbindung des Bauteiles quer zu der Längsrichtung erstreckt. Die Faserwickelung ist bevorzugt so ausgestaltet, dass sie um den Auflageabschnitt und/oder den Anbindungsabschnitt verläuft. Durch diese bevorzugte Ausgestaltung kann die erfindungsgemäße Anordnung gut an verschiedene Anforderungen hinsichtlich Kraftaufnahme und Krafteinleitung in das Rahmenelement angepasst werden.

Ist beispielsweise der quer zu der Längsrichtung verlaufende Anbindungsabschnitt zur Anbindung eines Lenkers einer Radaufhängung vorgesehen, können durch eine um den Auflageabschnitt verlaufende Faserwickelung Kräfte, die in der Längsrichtung wirken, besser aufgenommen und in das Rahmenelement eingeleitet werden.

In einer weiteren bevorzugten Ausgestaltung der erfindungsgemäßen Anordnung erstreckt sich der Anbindungsabschnitt von einem in der Längsrichtung liegenden Endabschnitt des Auflageabschnittes. Die Faserwickelung kann in diesem Fall so ausgestaltet sein, dass sie um den Auflageabschnitt und/oder den Anbindungsabschnitt verläuft.

In einer weiteren bevorzugten Ausgestaltung der erfindungsgemäßen Anordnung ist der Auflageabschnitt aus einem ersten Teilelement und einem zweiten Teilelement ausgebildet, die derart zusammengesetzt sind, dass sie das Rahmenelement zwischen sich einschließen. Die Faserwickelung ist in diesem Fall so ausgestaltet, dass sie um das erste und zweite Teilelement des Auflageabschnittes und/oder den Anbindungsabschnitt verläuft.

Durch diese zweiteilige Ausgestaltung des Auflageabschnittes wird dafür gesorgt, dass die die Faserwickelung ausbildende Faser einen stetigen Verlauf aufweist und an keinen unter Umständen scharfen Kanten anliegt. Die Kanten, über die die Faserwickelung notwendigerweise verläuft, können zusätzlich abgerundet/entgratet sein.

In einer weiteren bevorzugten Ausgestaltung der erfindungsgemäßen Anordnung umfasst das Verbindungselement mindestens zwei Anbindungsabschnitte. Hierbei können die Anbindungsabschnitte zwei getrennte, unabhängige Teile sein, die sich bevorzugt jeweils von einem Auflageabschnitt erstrecken, oder auch als ein einziges Teil ausgebildet sein, beispielsweise dadurch, dass beide Anbindungsabschnitte sich von einem gemeinsamen Auflageabschnitt erstrecken.

In diesem Fall kann die Faserwickelung über den Auflageabschnitt und/oder über die Anbindungsabschnitte verlaufen.

Wie bereits erläutert, kann die Faserwickelung derart hergestellt sein, dass die die Faserwickelung ausbildende Faser senkrecht zu der Längsrichtung verläuft. Ist die Faserwickelung aus mehreren einzelnen Fasern aufgebaut, ist es auch möglich, dass die einzelnen Fasern sich kreuzen. D.h. die Faser(n) können geodätische Linien bilden, die Punkte verbinden, die bezüglich der Längsrichtung auf gleicher Höhe liegen oder versetzt zueinander sind.

Bevorzugt sind das Rahmenelement und das Verbindungselement aus einem faserverstärkten Kunststoff ausgebildet, wobei es sich bei der Faserwickelung um eine aus einer Kunststofffaser ausgebildete Faserwickelung handelt.

Durch diese materialmäßige Ausgestaltung der entsprechenden Elemente der erfindungsgemäßen Anordnung tritt keine Korrosion auf und darüber hinaus können das Rahmenelement, das Verbindungselement und die Faserwickelung so ausgestaltet werden, dass sie gleiche oder ähnliche Wärmeausdehnungskoeffizienten aufweisen.

In einer weiteren bevorzugten Ausgestaltung der erfindungsgemäßen Anordnung weist das Verbindungselement in einem Bereich, an dem die Faserwickelung verläuft, eine konkave Oberfläche zur Positionierung der Faserwickelung auf.

Hierbei kann es sich beispielsweise um Rillen zur Positionierung der die Faserwickelung aufbauenden Faser handeln. Diese Ausgestaltung sorgt dafür, dass ein Abrutschen der Faserwickelung bzw. einzelner Faserabschnitte verhindert wird.

Die Faserwickelung der erfindungsgemäßen Anordnung kann aus einer einzelnen Wicklung oder aus mehreren räumlich getrennten Teilwicklungen ausgebildet sein. Dabei kann die Wickelung oder jede Teilwicklung eine bestimmte Wicklungszahl aufweisen, wobei unter der Wicklungszahl zu verstehen ist, wie oft die die Wicklung/Teilwicklung ausbildende(n) Faser(n) um das Rahmenelement und das Verbindungselement gewickelt wurden.

An dieser Stelle sei nochmals erwähnt, dass die Faserwickelung derart hergestellt sein kann, dass die die Wickelung/Teilwickelung ausbildende Faser senkrecht zu der Längsrichtung verläuft. Ist die Wickelung/Teilwickelung aus mehreren einzelnen Fasern aufgebaut, ist es auch möglich, dass die einzelnen Fasern sich kreuzen. D.h. die Faser(n) können geodätische Linien bilden, die Punkte verbinden, die bezüglich der Längsrichtung auf gleicher Höhe liegen oder versetzt zueinander sind.

In einer weiteren bevorzugten Ausgestaltung der erfindungsgemäßen Anordnung ist zwischen dem Rahmenelement und dem Verbindungselement zusätzlich zu der Faserwicklung eine stoffschlüssige Verbindung ausgebildet.

Eine solche stoffschlüssige Verbindung kann beispielsweise über einen Klebstoff hergestellt werden. Durch die Kombination der Faserwickelung und der stoffschlüssigen Verbindung kann die erfindungsgemäße Anordnung gut an verschiedene Anforderungen hinsichtlich Krafteinleitung in die Rahmenkonstruktion ausgebildet werden. Beispielsweise übernimmt die stoffschlüssige Verbindung über den Klebstoff Scherbeanspruchungen und die über die Faserwickelung hergestellte Verbindung Zugbeanspruchungen.

In einer weiteren bevorzugten Ausgestaltung der erfindungsgemäßen Anordnung ist die stoffschlüssige Verbindung zwischen dem Rahmenelement und dem Auflageabschnitt durch einen Klebstoff ausgebildet und der Auflageabschnitt an zumindest einem in der Längsrichtung des Rahmenelementes liegenden Endabschnitt derart ausgebildet, dass eine Menge des Klebstoffes zunimmt.

Mit anderen Worten ist der Auflageabschnitt so ausgebildet, dass er an dem zumindest einen in Längsrichtung des Rahmenelementes liegenden Endabschnitt derart abgeschrägt bzw. abgestuft ist, dass sich der Spalt zwischen Rahmenelement und Auflageabschnitt, in dem sich der Klebstoff befindet, vergrößert. Durch diese bevorzugte Ausgestaltung werden auftretende Spitzenspannungen, insbesondere aus Kerbwirkungen resultierende Spitzenspannungen, an dem Endabschnitt abgeschwächt/verringert.

Bei dem Klebstoff kann es sich beispielsweise um kalt- oder warmhärtende Klebstoffe, weiche Elastomere oder steife Klebstoffe handeln. Der sich zwischen dem Rahmenelement und dem Auflageabschnitt befindende Spalt kann in einer Größenordnung von bis zu 3 mm liegen.

An dem zumindest einen in der Längsrichtung liegenden Endabschnitt kann auch bevorzugt eine überstehende aus Klebstoff bestehende Wulst ausgebildet werden. Dies führt ebenfalls zum Abbau von Spitzenspannungen.

Gemäß der vorliegenden Erfindung wird ebenfalls ein Verfahren zur Befestigung eines zur Anbindung eines Bauteils vorgesehenen Verbindungselementes an einem Rahmenelement eines Kraftfahrzeuges geschaffen. Das Verfahren umfasst das Vorsehen des Rahmenelementes und des Verbindungselementes, wobei das Verbindungselement an dem Rahmenelement über eine Faserwickelung befestigt wird.

Die Faserwickelung wird bevorzugt so ausgebildet, dass sie in Abhängigkeit von bestimmungsgemäß wirkenden Kräften in Kraftflussrichtung verläuft.

Die Faserwickelung kann durch Wickeln einer einzigen Faser oder auch mehrerer Fasern ausgebildet werden. Hierbei wird die Faser so gewickelt, dass Faserabschnitte parallel oder gekreuzt verlaufen. Allgemein wird die Faser bevorzugt in Kraftflussrichtung gewickelt.

Die Faserwickelung kann eine aus einem Matrixwerkstoff ausgebildete Matrix aufweisen, in die die entsprechende die Faserwickelung ausbildende Faser eingebettet ist. Die Matrix kann dadurch hergestellt werden, dass die die Faserwickelung bildende Faser in einem in den Matrixwerkstoff getränkten Zustand zur Befestigung des Verbindungselementes an dem Rahmenelement gewickelt wird oder auch der Matrixwerkstoff nach dem Abschluss des Wickelvorgangs auf die Faserwickelung aufgebracht wird.

In einer bevorzugten Ausgestaltung des erfindungsgemäßen Verfahrens erstreckt sich das Rahmenelement in einer Längsrichtung und weist das Verbindungselement einen Anbindungsabschnitt zur Anbindung des Bauteils auf. Der Anbindungsabschnitt erstreckt sich nach dem Befestigen bestimmungsgemäß quer zu der Längsrichtung und ist beispielsweise zur Anbindung eines Lenkers einer Radaufhängung vorgesehen. Das Verbindungselement wird durch die Faserwickelung an dem Rahmenelement befestigt, indem eine Faser um den Anbindungsabschnitt gewickelt wird.

In einer weiteren bevorzugten Ausgestaltung des erfindungsgemäßen Verfahrens erstreckt sich das Rahmenelement in einer Längsrichtung, weist das Verbindungselement einen Auflageabschnitt auf, der an eine Außenoberfläche des Rahmenelementes angepasst ist und von dem sich ein Anbindungsabschnitt zur Anbindung des Bauteils quer zu der Längsrichtung erstreckt, wobei das Verbindungselement durch die Faserwickelung an dem Rahmenelement befestigt wird, indem eine Faser um den Auflageabschnitt und/oder den Anbindungsabschnitt gewickelt wird.

Allgemein kann die Faserwickelung derart hergestellt werden, dass die die Faserwickelung ausbildende Faser senkrecht zu der Längsrichtung verläuft. Ist die Faserwickelung aus mehreren einzelnen Fasern aufgebaut, ist es auch möglich, dass die einzelnen Fasern sich kreuzen. D.h. die Faser(n) können geodätische Linien bilden, die Punkte verbinden, die bezüglich der Längsrichtung auf gleicher Höhe liegen oder versetzt zueinander sind.

In einer weiteren bevorzugten Ausgestaltung des erfindungsgemäßen Verfahrens wird die Faser zum Befestigen des Verbindungselementes an dem Rahmenelement derart gewickelt, dass Faserabschnitte der Faser zueinander parallel verlaufen oder sich kreuzen.

In einer weiteren bevorzugten Ausgestaltung des erfindungsgemäßen Verfahrens wird die Faser in einer Richtung gewickelt, die sich von einer Erstreckungsrichtung, in der sich der Anbindungsabschnitt erstreckt, unterschiedlich ist.

In einer weiteren bevorzugten Ausgestaltung des erfindungsgemäßen Verfahrens ist das Rahmenelement derart ausgebildet, dass es sich in einer Längsrichtung erstreckt und eine Anlageoberfläche aufweist, auf der das Verbindungselement mit einer zu der Anlageoberfläche korrespondierenden Auflageoberfläche in Anlage gebracht wird, zwischen der Anlageoberfläche und der Auflageoberfläche eine stoffschlüssige Verbindung erzeugt wird und die Faserwickelung derart ausgebildet wird, dass sie die stoffschlüssige Verbindung komprimiert.

In einer weiteren bevorzugten Ausgestaltung des erfindungsgemäßen Verfahrens wird die stoffschlüssige Verbindung zwischen der Anlageoberfläche und der Auflageoberfläche durch einen Klebstoff derart ausgebildet, dass eine Menge des Klebstoffes an zumindest einem in der Längsrichtung liegenden Endabschnitt des Verbindungselementes zunimmt.

Im Folgenden werden bevorzugte Ausführungsformen der erfindungsgemäßen Anordnung unter Bezug auf die beigefügten Figuren erläutert.
**Fig. 1** zeigt eine erste bevorzugte Ausführungsform einer erfindungsgemäßen Anordnung aus einem Rahmenelement eines Kraftfahrzeuges und einem zur Anbindung eines Bauteils vorgesehenen Verbindungselementes. Das Verbindungselement ist an dem Rahmenelement über eine Faserwickelung befestigt.
**Fig. 2A und 2B** zeigen die erste bevorzugte Ausführungsform der erfindungsgemäßen Anordnung sowie eine entsprechende Variante.
**Fig. 2C bis 2F** zeigen eine zweite bevorzugte Ausführungsform der erfindungsgemäßen Anordnung sowie entsprechende Varianten.
**Fig. 2G** zeigt eine dritte bevorzugte Ausführungsform der erfindungsgemäßen Anordnung.
**Fig. 3** zeigt eine mögliche Abwandlung der bevorzugten Ausführungsformen der erfindungsgemäßen Anordnung, wobei zwischen dem Rahmenelement und dem Verbindungselement ein Formschluss besteht.
**Fig. 4A bis 4D** zeigen die in Fig. 2E dargestellte Variante der erfindungsgemäßen Anordnung und verschiedene Ausgestaltungen eines Auflageabschnittes des Verbindungselementes zur Erzielung einer sich vergrößernden Klebeschicht.
**Fig. 5** zeigt eine Rahmenkonstruktion eines für ein Kraftfahrzeug vorgesehenen Fahrwerkes, wobei eine Anbindungsstelle zur Anbindung eines Lenkers einer Radaufhängung an einem Rahmenelement des Fahrwerkes ausgebildet ist.

Bezüglich der im Folgenden dargestellten Ausführungsformen der erfindungsgemäßen Anordnung wird an dieser Stelle erwähnt, dass die im Vorgehenden gemachten Erläuterungen hinsichtlich der Materialien, der Faserwicklung und der stoffschlüssigen Verbindung zwischen Verbindungselement und Rahmenelement für die Ausführungsformen ebenfalls gelten.

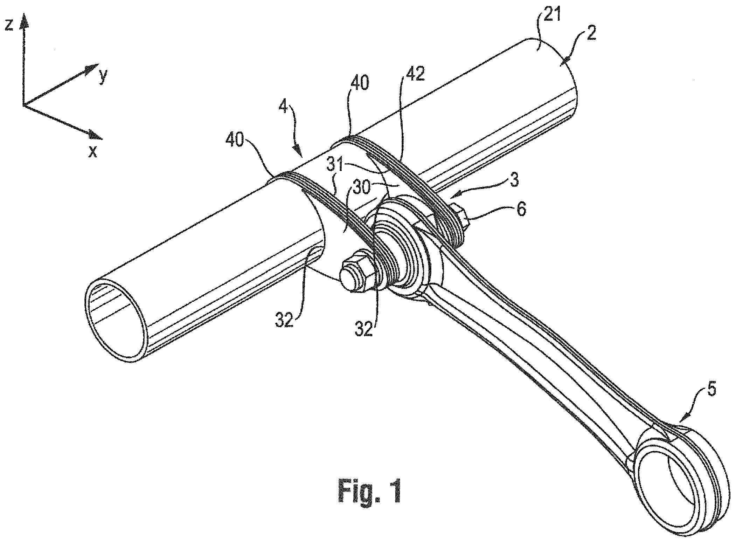

In Fig. 1 ist eine erste bevorzugte Ausführungsform einer erfindungsgemäßen Anordnung 1 gezeigt.

Die erfindungsgemäße Anordnung 1 umfasst ein Rahmenelement 2, das zu einer Rahmenkonstruktion eines Kraftfahrzeuges, beispielsweise einem Fahrwerk eines Kraftfahrzeuges, gehört, und ein Verbindungselement 3, das an dem Rahmenelement 2 befestigt ist.

An dem Verbindungselement 3 ist ein Lenker 5, der beispielsweise zu einer Radaufhängung gehört, mittels einer Schraubverbindung 6 angebracht. Über den Lenker werden bei Betrieb des Kraftfahrzeuges Kräfte in die Rahmenkonstruktion bzw. in das Rahmenelement 2 eingeleitet.

Das Rahmenelement 2 erstreckt sich in der in Fig. 1 gezeigten Y-Richtung, die gleichzeitig der Längsrichtung des Rahmenelementes 2 entspricht.

Das Verbindungselement 3 umfasst in der in Fig. 1 gezeigten Ausführungsform zwei Anbindungsabschnitte 30, die sich in der in Fig. 1 gezeigten X-Richtung erstrecken. Die X-Richtung verläuft quer bzw. senkrecht zu der Längsrichtung bzw. Y-Richtung.

Der Lenker 5 ist mittels der Schraubverbindung 6 an den Anbindungsabschnitten 30 drehbar gelagert befestigt. Der Lenker 5 erstreckt sich, wie auch die Anbindungsabschnitte 30, in der Richtung quer zu der Längsrichtung, d.h. in X-Richtung, wobei über den Lenker 5 bestimmungsgemäß in X-Richtung wirkende Zug- und Druckkräfte mittelbar über die Anbindungsabschnitte 30 in das Rahmenelement 2 eingeleitet werden.

Die Anbindungsabschnitte 30 sind in der in Fig. 1 gezeigten Ausführungsform der erfindungsgemäßen Anordnung 1 über eine Faserwickelung 4 an dem Rahmenelement 2 befestigt, wobei die Faserwickelung 4 in Fig. 1 zwei Teilwickelungen 40 aufweist, die jeweils eines der Anbindungsabschnitte 30 an dem Rahmenelement 2 befestigen.

Zur Herstellung jeder der Teilwickelungen 40 der Faserwickelung 4 wird eine entsprechende Faser quer zu der Längsrichtung, d.h. in X-Richtung um das Rahmenelement 2 und den entsprechenden Anbindungsabschnitt 30 gewickelt. Die die Teilwickelung 40 ausbildende Faser verläuft auf einer Außenoberfläche 31 des entsprechenden Anbindungsabschnittes 30 und der Außenoberfläche 21 des Rahmenelementes 2. Jede der Teilwickelungen 41 kann aus einer einzelnen mehrfach um den Anbindungsabschnitt 30 und das Rahmenelement 2 gewickelten Faser oder auch aus mehreren einzelnen jeweils mehrfach um den Anbindungsabschnitt 30 und das Rahmenelement 2 gewickelten Fasern hergestellt sein.

Insbesondere verläuft eine die Teilwickelung 40 ausbildende Faser auf der Außenoberfläche 21 des Rahmenelementes 2 und der Außenoberfläche 31 des entsprechenden Anbindungsabschnittes 30 derart, dass verschiedene Faserabschnitte 42 der Faser zueinander parallel verlaufen. Mit anderen Worten liegen Faserabschnitte 42 der entsprechenden Faser, die nach einmaligem Umlaufen des Rahmenelementes 2 bzw. des Anbindungsabschnittes 30 nebeneinanderliegen, parallel zueinander. Durch diese Ausgestaltung der Faserwickelung 4 können insbesondere in positiver X-Richtung wirkende Zugkräfte gut über die Faserwickelung 4 bzw. die beiden Teilwickelungen 40 gut aufgenommen werden.

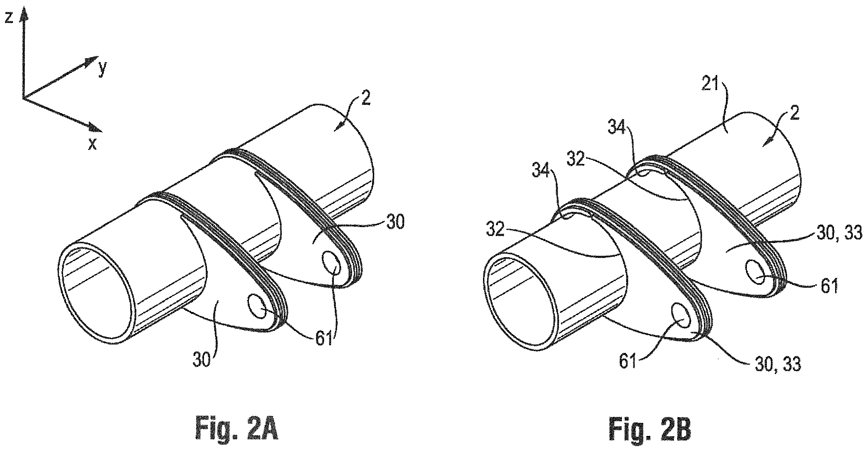

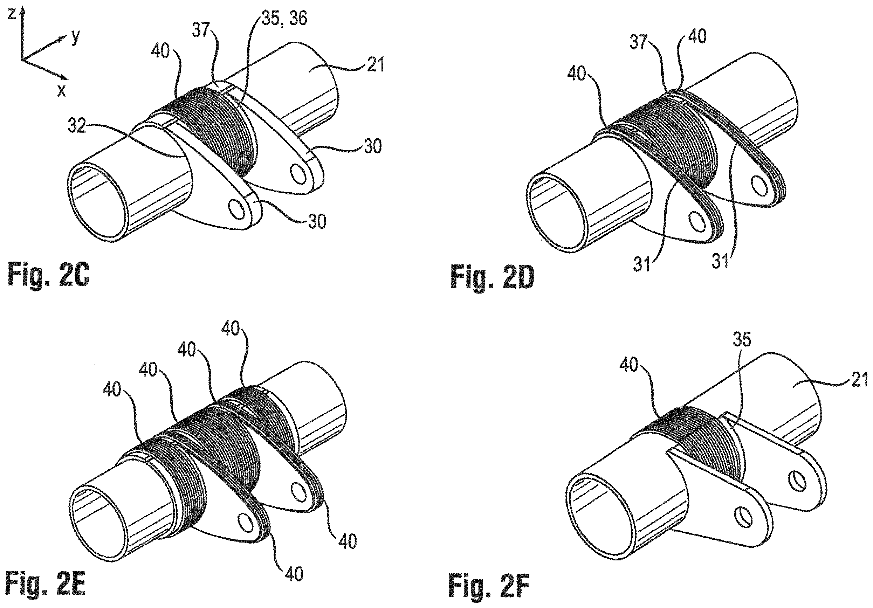

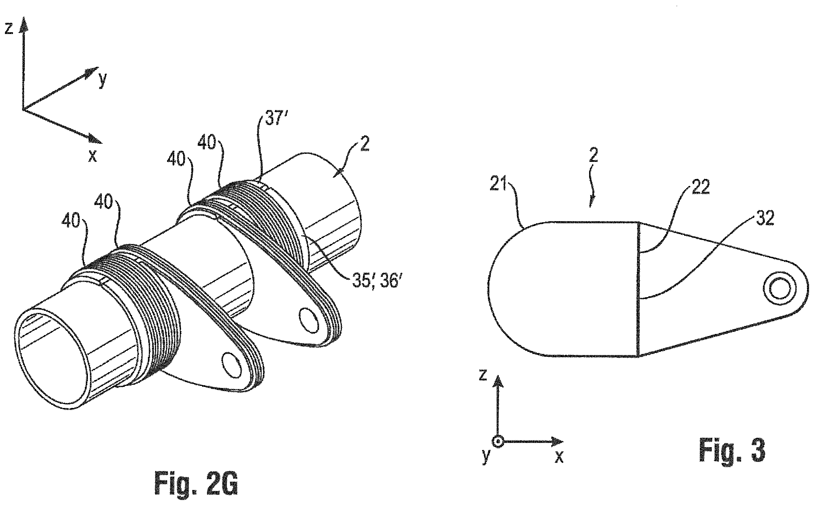

Die Anbindungsabschnitte 30 liegen in der in Fig. 2 gezeigten Ausführungsform mit einer dem Rahmenelement 2 zugewandten Auflageoberfläche 32 an der Außenoberfläche 21 des Rahmenelementes 2 an. Die Auflageoberfläche 32 ist so ausgestaltet, dass sie an die Außenoberfläche 21 des Rahmenelementes 2 angepasst ist. Genauer bedeutet dies in der vorliegenden Ausführungsform, dass die Auflageoberfläche 32 aus y-Richtung gesehen kreisbogenförmig ausgestaltet ist und somit an den kreisförmigen Querschnitt (X-Z-Ebene) des Rahmenelementes angepasst ist.

In Fig. 2A ist die in Fig. 1 gezeigte Anordnung 1 nochmals dargestellt, wobei in Fig. 2A die Schraubverbindung 6 gelöst und der Lenker 5 entfernt worden ist. Hierdurch werden die Durchgangsöffnungen 61 für die Schraubverbindung 6 vollständig sichtbar.

In Fig. 2B ist eine Variante der in Fig. 2A gezeigten Anordnung 1 dargestellt. Die in Fig. 2B gezeigte Variante unterscheidet sich von der in Fig. 2A gezeigten dadurch, dass die Anbindungsabschnitte 30 mehrteilig, insbesondere zweiteilig, ausgestaltet sind und das Rahmenelement 2 jeweils vollständig umlaufen. Die Anbindungsabschnitte 30 umfassen jeweils ein erstes Teilelement 33, in dem sich die Durchgangsöffnung 61 für die Schraubverbindung befindet und das sich in der X-Richtung erstreckt, und ein zweites Teilelement 34, das das erste Teilelement 33 derart ergänzt, dass beide Teilelemente 33, 34 zusammen das Rahmenelement 2 zwischen sich einschließen. Somit umläuft jeder das erste und zweite Teilelement 33, 34 aufweisende Anbindungsabschnitt 30 bis auf einen sich zwischen den Teilelementen befindenden Spalt das Rahmenelement 2 vollständig. In dieser Variante ist die Auflageoberfläche 32 jedes der Anbindungsabschnitte 30 folglich durch das erste und zweite Teilelement 33, 34 gebildet, wobei der zu dem ersten Teilelement 33 gehörende Teil der Auflageoberfläche 32 in der X-Z-Ebene liegend halbkreisförmig und der zu dem zweiten Teilelement 34 gehörende Teil der Auflageoberfläche 32 in der X-Z-Ebene liegend ebenfalls halbkreisförmig sind. Das heißt, die Teilelemente 33, 34 können so zusammengesetzt werden, dass sie an der Außenoberfläche 21 des Rahmenelementes 2 anliegen und somit die Anbindungsabschnitte 30 jeweils das Rahmenelement 2 vollständig umlaufen.

Hierdurch wird erreicht, dass die Teilwickelungen 40 nicht wie in Fig. 2A gezeigt über eine Kante an dem Übergang zwischen dem entsprechenden Anbindungsabschnitt 30 und dem Rahmenelement 2 verlaufen. Beispielsweise wird damit verhindert, dass durch die Kante an dem in Fig. 2A gezeigten Übergang zwischen Anbindungsabschnitt 30 und Rahmenelement 2 Beschädigungen der Teilwickelung 40 auftreten.

In Fig. 2C ist eine zweite Ausführungsform der erfindungsgemäßen Anordnung 1 gezeigt. In dieser zweiten Ausführungsform umfasst das Verbindungselement 3 einen Auflageabschnitt 35, der an die Außenoberfläche 21 des Rahmenelementes 2 angepasst ist. Der Auflageabschnitt ist in dieser Ausführungsform durch ein erstes Teilelement 36 und ein zweites Teilelement 37 aufgebaut, die zusammen das Rahmenelement 2 zwischen sich einschließen.

Von dem ersten Teilelement 36 des Auflageabschnittes 35 erstrecken sich die Anbindungsabschnitte 30, die in dieser Variante insoweit keine voneinander getrennten Teile sind. Die Anbindungsabschnitte 30 liegen bei der in Fig. 2C gezeigten zweiten Ausführungsform an den in der Längsrichtung liegenden Endabschnitten, d.h. ganz am äußeren Rand, des ersten Teilelementes 36 des Auflageabschnittes 35.

Die Auflageoberfläche 32 wird in dieser zweiten Ausführungsform durch die dem Rahmenelement 2 zugewandte Oberfläche des ersten und zweiten Teilelementes 36, 37 gebildet. Der zu dem ersten Teilelement 36 gehörende Teil der Auflageoberfläche 32 ist in der X-Z-Ebene halbkreisförmig und der zu dem zweiten Teilelement 37 gehörende Teil der Auflageoberfläche 32 ist in der X-Z-Ebene ebenfalls halbkreisförmig ist. Das heißt, die Teilelemente 36, 37 können so zusammengesetzt werden, dass sie an der Außenoberfläche 21 des Rahmenelementes 2 anliegen und somit der Auflageabschnitt 35 das Rahmenelement 2 vollständig umläuft.

In dieser zweiten Ausführungsform verläuft die Faserwickelung 4 zwischen den Anbindungsabschnitten 30 über den Auflageabschnitt 35, d.h. das erste und zweite Teilelement 36,37 des Auflageabschnittes 35. Die Faserwickelung ist in dieser Ausführungsform nicht aus mehreren voneinander getrennten Teilwickelungen sondern aus einer einzigen Wicklung 40 ausgebildet. Die Wicklung 40 kann aus einer oder mehreren einzelnen Fasern ausgebildet sein.

Durch diese Ausgestaltung des Verbindungselementes 3 kann die Wickelung 40 eine größere Wicklungszahl, d.h. Anzahl von Umläufen der Faser(n), haben und damit stärker ausgebildet werden. Darüber hinaus können in dieser Variante durch das Verbindungselement 3 auch besser Scherkräfte, die in Längsrichtung wirken, aufgenommen und in das Rahmenelement 2 eingeleitet werden.

In Fig. 2D ist eine Variante der zweiten Ausführungsform der erfindungsgemäßen Anordnung 1 gezeigt. Die in Fig. 2D gezeigte Variante unterscheidet sich von der in Fig. 2C gezeigten lediglich dadurch, dass die Faserwickelung 4 zwei weitere Teilwickelungen 40 aufweist, die auf den Außenoberflächen 31 der Anbindungsabschnitte 30 und der Außenoberfläche des zweiten Teilelementes 37 des Auflageabschnittes verlaufen.

In Fig. 2E ist eine weitere Variante der zweiten Ausführungsform der erfindungsgemäßen Anordnung 1 gezeigt. Diese Variante unterscheidet sich von der in Fig. 2D gezeigten dadurch, dass der Auflageabschnitt 35 sich gegenüber den Anbindungsabschnitten 30 weiter in der Längsrichtung (positive und negative Y-Richtung) erstreckt. Mit anderen Worten ist das Abmaß des Auflageabschnittes 35 in der Längsrichtung größer als das des Auflageabschnittes in Fig. 2C und 2D. Oder anders ausgedrückt, liegen die Anbindungsabschnitte 30 nicht an den in Längsrichtung liegenden Endabschnitten des Auflageabschnittes 35.

Die Faserwickelung 4 umfasst in der in Fig. 2E gezeigten Variante gegenüber der in Fig. 2D gezeigten Variante zwei weitere Teilwickelungen 40, die in der Längsrichtung an den äußeren Endabschnitten des Auflageabschnittes 35 vorgesehen sind.

In Fig. 2F ist eine weitere Variante der zweiten Ausführungsform der erfindungsgemäßen Anordnung 1 gezeigt. Diese Variante umfasst einen Auflageabschnitt 35, der an die Außenoberfläche 21 des Rahmenelementes angepasst ist und von dem sich an dessen in Längsrichtung liegenden Endabschnitten die Anbindungsabschnitte 30 erstrecken. In dieser Variante sind die Anbindungsabschnitte 30 gegenüber den in Fig. 2A bis 2E gezeigten dünner ausgebildet.

Darüber hinaus umfasst der Auflageabschnitt 35 kein zweites Teilelement. Folglich umläuft der Auflageabschnitt 35 das Rahmenelement nicht vollständig.

Die Faserwickelung 4 umfasst nur eine Wickelung 40, die in der in Fig. 2F gezeigten Variante über den Auflageabschnitt 35 bzw. zwischen den Anbindungsabschnitten 30 verläuft.

In Fig. 2G ist eine dritte Ausführungsform der erfindungsgemäßen Anordnung gezeigt, wobei sich diese dritte Ausführungsform von der in Fig. 2E gezeigten Variante der zweiten Ausführungsform dadurch unterscheidet, dass der Teil des Auflageabschnitt 35, der sich zwischen den Anbindungsabschnitten 30 befindet, nicht vorhanden ist. Anders ausgedrückt, sind die Anbindungsabschnitte 30 nicht wie bei den in Fig. 2C bis 2E gezeigten Varianten der zweiten Ausführungsform gemeinsam an einem einzigen Auflageabschnitt 35 sondern an mehreren Auflageabschnitten 35' vorgesehen. Die Auflageabschnitte 35' umfassen, wie der Auflageabschnitt 35 in den Fig. 2C bis 2E, ein erstes Teilelement 36' und ein zweites Teilelement 37', die sich derart ergänzen, dass die Auflageabschnitte 35' das Rahmenelement 2 vollständig umlaufen. Die Anbindungsabschnitte 30 sind bei der in Fig. 2G gezeigten Variante an den einander zugewandten Endabschnitten der gezeigten Auflageabschnitte 35' ausgebildet. Die Auflageabschnitte 35' erstrecken sich in der Längsrichtung auf der einander abgewandten Seite der Anbindungsabschnitte 30.

In dieser dritten Ausführungsform der erfindungsgemäßen Anordnung umfasst die Faserwickelung 4 vier Teilwickelungen 40, die einerseits um die Auflageabschnitte 35' und andererseits über die Außenoberfläche der Anbindungsabschnitte 30 und die Außenoberflächen der zweiten Teilelemente 37' der Auflageabschnitte 35' verlaufen.

In Fig. 3 ist eine mögliche Abwandlung der im Vorhergehenden erläuterten Ausführungsformen gezeigt. Die Fig. 3 entspricht einer Ansicht der Anordnung gesehen aus der in Fig. 3 gezeigten Y-Richtung, die sich senkrecht zur Zeichenebene erstreckt. Insoweit verläuft auch das Rahmenelement 2 in dieser Figur senkrecht zur Zeichenebene, wobei die in Fig. 3 gezeigte Ansicht der X-Z-Ebene entspricht. Die Abwandlung lässt sich auf alle im Vorhergehenden gezeigten Ausführungsformen und deren Varianten übertragen und unterscheidet sich von diesen insoweit nur dadurch, dass der Querschnitt des Rahmenelementes nicht vollständig kreisförmig ist. Wie in Fig. 3 gezeigt, umfasst der Querschnitt des Rahmenelementes 2 einen kreisbogenförmigen Abschnitt und einen linienförmigen Abschnitt. Das heißt das Rahmenelement 2 umfasst zumindest an dem Ort, an dem das Verbindungselement 3 befestigt ist, eine kreisbogenförmige Oberfläche 21, auf der auch die Faserwickelung 4 verläuft, und eine ebene Anlageoberfläche 22, an der das Verbindungselement 3 mit einer ebenen Auflageoberfläche 32 in Anlage gebracht ist.

Wie aus der Fig. 3 ersichtlich ist, wird durch diese Ausgestaltung der erfindungsgemäßen Anordnung ein Formschluss zwischen dem Rahmenelement und dem Verbindungselement hergestellt. Dieser Formschluss ist beispielsweise dahingehend vorteilhaft, dass ein Verdrehen des Verbindungselementes 3 gegenüber dem Rahmenelement verhindert wird. Insoweit kann über die in Fig. 3 gezeigte Anordnung ein Moment gut in das Rahmenelement 2 bzw. die entsprechende Rahmenkonstruktion eingeleitet werden.

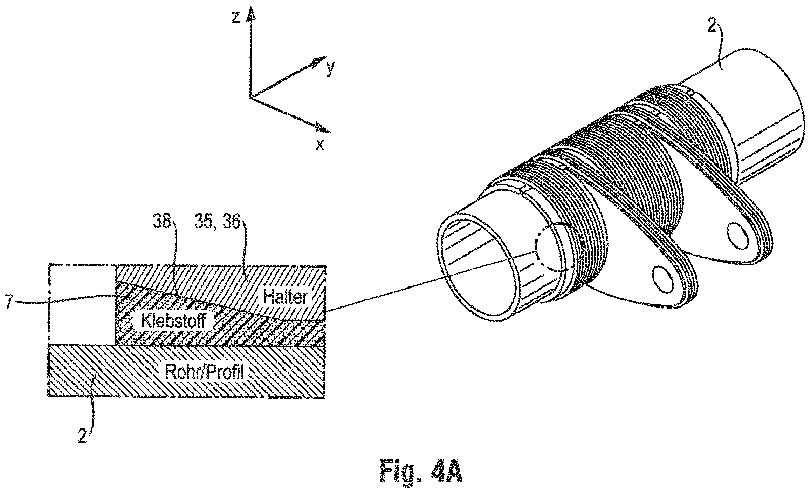

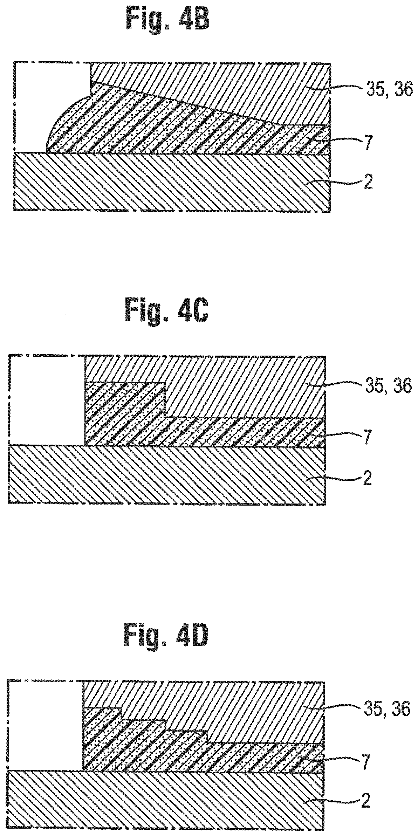

Die erfindungsgemäße Anordnung kann zu der Befestigung über die Faserwickelung noch durch eine zusätzliche stoffschlüssige Verbindung an dem Rahmenelement 2 befestigt werden. Diese zusätzliche stoffschlüssige Verbindung wird unter Bezug auf die Fig. 4A bis 4D beschrieben werden und kann bei allen Ausführungsformen und deren Varianten eingesetzt werden.

Fig. 4A zeigt beispielsweise die in Fig. 2E gezeigte erfindungsgemäße Anordnung, wobei die im Folgenden dargestellte stoffschlüssige Verbindung bzw. die entsprechende Ausbildung des Auflageabschnittes 35 auf alle in Fig. 2C bis 2G und 3 gezeigten Varianten übertragen werden kann.

Zur Herstellung der stoffschlüssigen Verbindung wird zwischen den Auflageabschnitt 35 und das Rahmenelement 2 ein Klebstoff eingebracht, über den der Auflageabschnitt 35 an dem Rahmenelement 2 befestigt wird. Der Auflageabschnitt 34 ist an den in Längsrichtung liegenden Endabschnitten, wie in Fig. 4A gezeigt, so ausgebildet, dass ein Spalt 38, in dem sich der Klebstoff befindet, an den Endabschnitten vergrößert. Hierdurch wird erreicht, dass die Klebstoffmenge sich an den in Längsrichtung liegenden Endabschnitten vergrößert.

Fig. 4B bis 4D zeigen weitere Varianten, wie die Klebstoffmenge an den in Längsrichtung liegenden Endabschnitten des Auflageabschnittes 35 vergrößert werden kann.

Zum einen kann die Menge an Klebstoff zwischen dem Auflageabschnitt 35 und dem Rahmenelement so groß sein, dass eine Wulst aus Klebstoff an dem Endabschnitt entsteht (siehe Fig. 4B).

Zum anderen kann, wie in den Fig. 4A bis 4D gezeigt, der Auflageabschnitt 35 einen zulaufenden oder abgestuften in Längsrichtung liegenden Randbereich haben, sodass an diesen Randbereichen die Menge des Klebstoffes zunimmt. Die zunehmende Menge an Klebstoff an den Randbereichen hat die Wirkung, dass an dieser Stelle geringere Spitzenspannungen auftreten und die Gefahr eines Abrisses des Klebstoffes vermindert wird.

## Patentansprüche

1. Anordnung aus einem Rahmenelement (2) eines Kraftfahrzeuges und einem zur Anbindung eines Bauteils (5) vorgesehenen Verbindungselementes (3), wobei das Verbindungselement (3) an dem Rahmenelement (2) durch eine Faserwickelung (4) befestigt ist.

2. Anordnung gemäß Anspruch 1, wobei
das Rahmenelement (2) sich in einer Längsrichtung erstreckt,
das Verbindungselement (3) einen Anbindungsabschnitt (30) zur Anbindung des Bauteils (5) aufweist, der sich quer zu der Längsrichtung erstreckt, und
die Faserwickelung (4) derart ausgestaltet ist, dass sie um den Anbindungsabschnitt (30) verläuft.

3. Anordnung gemäß Anspruch 1 oder 2, wobei das Verbindungselement (3) eine Außenoberfläche (31) aufweist, auf der die Faserwicklung (4) verläuft, und derart ausgestaltet ist, dass die Außenoberfläche (31) des Verbindungselementes mit einer Außenoberfläche (21) des Rahmenelementes (2) bündig ist.

4. Anordnung gemäß Anspruch 2, wobei
der Anbindungsabschnitt (30) aus einem ersten Teilelement (33) und einem zweiten Teilelement (34) ausgebildet ist, die derart zusammengesetzt sind, dass sie das Rahmenelement (2) einschließen, und
die Faserwickelung (4) derart ausgestaltet ist, dass sie um das erste und zweite Teilelement (33, 34) des Anbindungsabschnittes (30) verläuft.

5. Anordnung gemäß Anspruch 1, wobei
das Rahmenelement (2) sich in einer Längsrichtung erstreckt,
das Verbindungselement (3) einen Auflageabschnitt (35) aufweist, der an eine Außenoberfläche (21) des Rahmenelementes (2) angepasst ist und von dem sich ein Anbindungsabschnitt (30) zur Anbindung des Bauteils (5) quer zu der Längsrichtung erstreckt, und
die Faserwickelung (4) derart ausgestaltet ist, dass sie um den Auflageabschnitt (35) und/oder den Anbindungsabschnitt (30) verläuft.

6. Anordnung gemäß Anspruch 5, wobei
sich der Anbindungsabschnitt (30) von einem in der Längsrichtung liegenden Endabschnitt des Auflageabschnittes (35) erstreckt und
die Faserwickelung (4) derart ausgestaltet ist, dass sie um den Auflageabschnitt (35) und/oder den Anbindungsabschnitt (30) verläuft.

7. Anordnung gemäß einem der Ansprüche 5 und 6, wobei
der Auflageabschnitt (35) aus einem ersten Teilelement (36) und einem zweiten Teilelement (37) ausgebildet ist, die derart zusammengesetzt sind, dass sie das Rahmenelement (2) einschließen, und
die Faserwickelung (4) derart ausgestaltet ist, dass sie um das erste und zweite Teilelement (35,36) des Auflageabschnittes (35) und/oder den Anbindungsabschnitt (30) verläuft.

8. Anordnung gemäß einem der Ansprüche 5 bis 7, wobei
das Verbindungselement (3) mindestens zwei Anbindungsabschnitte (30) aufweist.

9. Anordnung gemäß einem der Ansprüche 1 bis 8, wobei
das Rahmenelement (2) und das Verbindungselement (3) aus einem faserverstärktem Kunststoff ausgebildet sind und
die Faserwickelung (4) aus einer Kunststofffaser ausgebildet ist.

10. Anordnung gemäß einem der vorhergehenden Ansprüche 1 bis 9, wobei das Verbindungselement (3) in einem Bereich, an dem die Faserwickelung ausgebildet ist, konkave Abschnitte zur Positionierung von Faserabschnitten (42) aufweist.

11. Anordnung gemäß einem der Ansprüche 1 bis 10, wobei
zwischen dem Rahmenelement (2) und dem Verbindungselement (3) zusätzlich zu der Faserwickelung (4) eine stoffschlüssige Verbindung ausgebildet ist.

12. Anordnung gemäß einem der Ansprüche 5 bis 11, wobei
zwischen dem Rahmenelement (2) und dem Auflageabschnitt (35) durch einen Klebstoff (7) eine stoffschlüssige Verbindung ausgebildet ist und
der Auflageabschnitt (35) an zumindest einem in der Längsrichtung liegenden Endabschnitt derart ausgebildet ist, dass eine Menge des Klebstoffes (7) zunimmt.

13. Verfahren zur Befestigung eines zur Anbindung eines Bauteils (5) vorgesehenen Verbindungselementes (3) an einem Rahmenelement (2) eines Kraftfahrzeuges, wobei das Verfahren folgende Schritte aufweist:
Vorsehen des Rahmenelementes (2) und des Verbindungselementes (3); und
Befestigen des Verbindungselementes (3) an dem Rahmenelement (2) über eine Faserwickelung (4).

14. Verfahren gemäß Anspruch 13, wobei
sich das Rahmenelement (2) in einer Längsrichtung erstreckt und das Verbindungselement (3) einen Anbindungsabschnitt (30) zur Anbindung des Bauteils (5) aufweist, der sich nach dem Befestigen bestimmungsgemäß quer zu der Längsrichtung erstreckt, und
das Verbindungselement (3) durch die Faserwickelung (4) an dem Rahmenelement (2) befestigt wird, indem eine Faser um den Anbindungsabschnitt (30) gewickelt wird.

15. Verfahren gemäß Anspruch 13, wobei
das Rahmenelement (2) sich in einer Längsrichtung erstreckt,
das Verbindungselement (3) einen Auflageabschnitt (35) aufweist, der an eine Außenoberfläche (21) des Rahmenelementes (2) angepasst ist und von dem sich ein Anbindungsabschnitt (30) zur Anbindung des Bauteils (5) quer zu der Längsrichtung erstreckt, und
das Verbindungselement (3) durch die Faserwickelung (4) an dem Rahmenelement (2) befestigt wird, indem eine Faser um den Auflageabschnitt (35) und/oder den Anbindungsabschnitt (30) gewickelt wird.

16. Verfahren gemäß einem der vorhergehenden Ansprüche 13 bis 15, wobei
die Faser zum Befestigen des Verbindungselementes (3) an dem Rahmenelement (2) derart gewickelt wird, dass Faserabschnitte der Faser zueinander parallel verlaufen oder sich kreuzen.

17. Verfahren gemäß einem der vorhergehenden Ansprüche 14 bis 16, wobei
die Faser in einer Richtung gewickelt wird, die sich von einer Erstreckungsrichtung, in der sich der Anbindungsabschnitt (30) erstreckt, unterschiedlich ist.

18. Verfahren gemäß einem der vorhergehenden Ansprüche 13 bis 17, wobei
das Rahmenelement (2) derart ausgebildet ist, dass es sich in einer Längsrichtung erstreckt und eine Anlageoberfläche aufweist, auf der das Verbindungselement (3) mit einer zu der Anlageoberfläche korrespondierenden Auflageoberfläche (32) in Anlage gebracht wird,
zwischen der Anlageoberfläche und der Auflageoberfläche (32) eine stoffschlüssige Verbindung (7) erzeugt wird, und
die Faserwickelung (4) derart ausgebildet wird, dass die stoffschlüssige Verbindung (7) komprimiert wird.

19. Verfahren gemäß Anspruch 18, wobei
die stoffschlüssige Verbindung (7) zwischen der Anlageoberfläche und der Auflageoberfläche (32) durch einen Klebstoff (7) derart ausgebildet wird, dass eine Menge des Klebstoffes (7) an zumindest einem in der Längsrichtung liegenden Endabschnitt des Verbindungselementes (3) zunimmt.

## Claims

1. An arrangement comprising a frame element (2) of a motor vehicle and a connecting element (3) provided for attaching a component (5), wherein the connecting element (3) is fastened to the frame element (2) by a fibre winding (4).

2. An arrangement according to Claim 1, wherein
the frame element (2) extends in a longitudinal direction,
the connecting element (3) has an attachment portion (30) for attaching the component (5) which extends transversely to the longitudinal direction, and
the fibre winding (4) is configured such that it runs around the attachment portion (30).

3. An arrangement according to Claim 1 or Claim 2, wherein the connecting element (3) has an outer surface (31) on which the fibre winding (4) runs, and is configured such that the outer surface (31) of the connecting element is flush with an outer surface (21) of the frame element (2).

4. An arrangement according to Claim 2, wherein
the attachment portion (30) is formed from a first partial element (33) and a second partial element (34) which are assembled such that they enclose the frame element (2), and
the fibre winding (4) is configured such that it runs around the first and second partial element (33, 34) of the attachment portion (30).

5. An arrangement according to Claim 1, wherein
the frame element (2) extends in a longitudinal direction,
the connecting element (3) has a bearing portion (35) which is adapted to an outer surface (21) of the frame element (2) and from which an attachment portion (30) for attaching the component (5) extends transversely to the longitudinal direction, and
the fibre winding (4) is configured such that it runs around the bearing portion (35) and/or the attachment portion (30).

6. An arrangement according to Claim 5, wherein
the attachment portion (30) extends from an end portion of the bearing portion (35) lying in the longitudinal direction and
the fibre winding (4) is configured such that it runs around the bearing portion (35) and/or the attachment portion (30).

7. An arrangement according to one of Claims 5 and 6, wherein
the bearing portion (35) is formed from a first partial element (36) and a second partial element (37) which are assembled such that they enclose the frame element (2), and
the fibre winding (4) is configured such that it runs around the first and second partial element (35, 36) of the bearing portion (35) and/or the attachment portion (30).

8. An arrangement according to one of Claims 5 to 7, wherein
the connecting element (3) has at least two attachment portions (30).

9. An arrangement according to one of Claims 1 to 8, wherein
the frame element (2) and the connecting element (3) are formed from a fibre-reinforced plastics material, and
the fibre winding (4) is formed from a plastics-material fibre.

10. An arrangement according to one of the preceding Claims 1 to 9, wherein the connecting element (3), in a region on which the fibre winding is formed, has concave portions for positioning fibre portions (42).

11. An arrangement according to one of Claims 1 to 10, wherein
a substance-to-substance bond is formed between the frame element (2) and the connecting element (3) in addition to the fibre winding (4).

12. An arrangement according to one of Claims 5 to 11, wherein
a substance-to-substance bond is formed between the frame element (2) and the bearing portion (35) by an adhesive (7), and
the bearing portion (35) on at least one end portion lying in the longitudinal direction is formed such that an amount of the adhesive (7) increases.

13. A method for fastening a connecting element (3) provided for attaching a component (5) on a frame element (2) of a motor vehicle, wherein the method comprises the following steps:
providing the frame element (2) and the connecting element (3); and
fastening the connecting element (3) to the frame element (2) via a fibre winding (4).

14. A method according to Claim 13, wherein
the frame element (2) extends in a longitudinal direction and the connecting element (3) has an attachment portion (30) for attaching the component (5) which after fastening extends as intended transversely to the longitudinal direction, and
the connecting element (3) is fastened by the fibre winding (4) to the frame element (2) in that a fibre is wound around the attachment portion (30).

15. A method according to Claim 13, wherein
the frame element (2) extends in a longitudinal direction,
the connecting element (3) has a bearing portion (35) which is adapted to an outer surface (21) of the frame element (2) and from which an attachment portion (30) for attaching the component (5) extends transversely to the longitudinal direction, and
the connecting element (3) is fastened by the fibre winding (4) to the frame element (2) in that a fibre is wound around the bearing portion (35) and/or the attachment portion (30).

16. A method according to one of the preceding Claims 13 to 15, wherein
the fibre for fastening the connecting element (3) to the frame element (2) is wound such that fibre portions of the fibre run parallel to each other or cross each other.

17. A method according to one of the preceding Claims 14 to 16, wherein
the fibre is wound in a direction which is different from a direction of extent in which the attachment portion (30) extends.

18. A method according to one of the preceding Claims 13 to 17, wherein
the frame element (2) is formed such that it extends in a longitudinal direction and has a contact surface on which the connecting element (3) is brought into contact with a bearing surface (32) which corresponds to the contact surface,
a substance-to-substance bond (7) is produced between the contact surface and the bearing surface (32), and
the fibre winding (4) is formed such that the substance-to-substance bond (7) is compressed.

19. A method according to Claim 18, wherein
the substance-to-substance bond (7) between the contact surface and the bearing surface (32) is formed by an adhesive (7) such that an amount of the adhesive (7) increases on at least one end portion of the connecting element (3) which lies in the longitudinal direction.

## Revendications

1. Ensemble composé d'un élément de châssis (2) d'un véhicule et d'un élément de liaison (3) destiné à permettre d'attacher un composant (5), l'élément de liaison (3) étant fixé à l'élément de châssis (2) par un enroulement de fibres (4).

2. Ensemble conforme à la revendication 1,
dans lequel :
l'élément de châssis (2) s'étend en direction longitudinale,
l'élément de liaison (3) comporte un segment d'attache (30) permettant d'attacher le composant (5), qui s'étend transversalement à la direction longitudinale, et
l'enroulement de fibres (4) est réalisé de façon à s'étendre autour du segment d'attache (30).

3. Ensemble conforme à la revendication 1 ou 2,
dans lequel :
l'élément de liaison (3) comporte une surface externe (31) sur laquelle s'étend l'enroulement de fibres (4) et est réalisé de sorte que sa surface externe (31) affleure la surface externe (21) de l'élément de châssis (2).

4. Ensemble conforme à la revendication 2,
dans lequel :
le segment d'attache (30) est formé d'un premier élément partiel (33) et
d'un second élément partiel (34) qui sont assemblés de façon à entourer l'élément de châssis (2), et
l'enroulement de fibres (4) est réalisé de façon à s'étendre autour du premier élément partiel et du second élément partiel (33, 34) du segment d'attache (30).

5. Ensemble conforme à la revendication 1,
dans lequel :
l'élément de châssis (2) s'étend en direction longitudinale,
l'élément de liaison (3) comporte un segment d'appui (35) qui est adapté à la surface externe (21) de l'élément de châssis (2) et à partir duquel s'étend transversalement à la direction longitudinale, un segment d'attache (30) permettant d'attacher le composant (5), et
l'enroulement de fibres (4) est réalisé de façon à s'étendre autour du segment d'appui (35) et/ou du segment d'attache (30).

6. Ensemble conforme à la revendication 5,
dans lequel :
le segment d'attache (30) s'étend à partir d'un segment d'extrémité du segment d'appui (35) situé dans la direction longitudinale, et
l'enroulement de fibres (4) est réalisé de façon à s'étendre autour du segment d'appui (35) et/ou du segment d'attache (30).

7. Ensemble conforme à l'une des revendications 5 et 6,
dans lequel :
le segment d'appui (35) est formé d'un premier élément partiel (36) et
d'un second élément partiel (37) qui sont assemblés de façon à entourer l'élément de châssis (2), et
l'enroulement de fibres (4) est réalisé de façon à s'étendre autour du premier et du second éléments partiels (35, 36) du segment d'appui (35) et/ou du segment d'attache (30).

8. Ensemble conforme à l'une des revendications 5 à 7,
dans lequel :
l'élément de liaison (3) comprend au moins deux segments d'attache (30).

9. Ensemble conforme à l'une des revendications 1 à 8,
dans lequel :
l'élément de châssis (2) et l'élément de liaison (3) sont réalisés en un matériau synthétique renforcé par des fibres, et
l'enroulement de fibres (4) est réalisé en fibres synthétiques.

10. Ensemble conforme à l'une des revendications précédentes 1 à 9,
dans lequel :
l'élément de liaison (3) comporte, dans la zone sur laquelle est formé l'enroulement de fibres, des segments concaves permettant de positionner des segments de fibres (42).

11. Ensemble conforme à l'une des revendications 1 à 10,
dans lequel, entre l'élément de châssis (2) et l'élément de liaison (3) est formée, en plus de l'enroulement de fibres (4), une liaison par la matière.

12. Ensemble conforme à l'une des revendications 5 à 11,
dans lequel :
entre l'élément de châssis (2) et le segment d'appui (35) est formée une liaison par la matière au moyen d'un adhésif (7), et
le segment d'appui (35) est réalisé, sur au moins un segment d'extrémité situé en direction longitudinale de façon à recueillir une partie de l'adhésif (7).

13. Procédé de fixation d'un élément de liaison (3) destiné à permettre d'attacher un composant (5) sur un élément de châssis (2) d'un véhicule, ce procédé comprenant les étapes suivantes consistant à :
se procurer l'élément de châssis (2) et l'élément de liaison (3), et
fixer l'élément de liaison (3) sur l'élément de châssis (2) par l'intermédiaire d'un enroulement de fibres (4).

14. Procédé conforme à la revendication 13,
selon lequel :
l'élément de châssis (2) s'étend en direction longitudinale, et l'élément de liaison (3) comporte un segment d'attache (30) permettant d'attacher le composant (5), qui s'étend après une fixation correcte transversalement à la direction longitudinale, et
l'élément de liaison (3) est fixé par l'enroulement de fibres (4) sur l'élément de châssis (2) en enroulant une fibre autour du segment d'attache (30).

15. Procédé conforme à la revendication 13,
selon lequel :
l'élément de châssis (2) s'étend en direction longitudinale,
l'élément de liaison (3) comporte un segment d'appui (35) qui est adapté à la surface externe (21) de l'élément de châssis (2) et à partir duquel s'étend, transversalement à la direction longitudinale un segment d'attache (30) permettant d'attacher le composant (5), et
l'élément de liaison (3) est fixé sur l'élément de châssis (2) par l'enroulement de fibres (4), en enroulant une fibre autour du segment d'appui (35) et/ou du segment d'attache (30).

16. Procédé conforme à l'une des revendications précédentes 13 à 15,
selon lequel :
pour permettre de fixer l'élément de liaison (3), sur l'élément de châssis (2), la fibre est entourée de sorte que des segments de fibre s'étendent parallèlement les uns aux autres ou se croisent.

17. Procédé conforme à l'une des revendications précédentes 14 à 16,
selon lequel
la fibre est enroulée dans une direction qui est différente de la direction d'extension du segment d'attache (30).

18. Procédé conforme à l'une des revendications précédentes 13 à 17,
selon lequel :
l'élément de châssis (2) est réalisé de sorte qu'il s'étende en direction longitudinale et comporte une surface de contact sur laquelle vient en contact l'élément de liaison (3) avec une surface d'appui (32) correspondant à cette surface de contact,
entre la surface de contact et la surface d'appui (32) il y a une liaison par la matière (7), et
l'enroulement de fibres (4) est réalisé de façon à comprimer la liaison par la matière (7).

19. Procédé conforme à la revendication 18, selon lequel
la liaison par la matière (7) entre la surface de contact et la surface d'appui (32) est formée par une colle (7) de sorte qu'une partie de cette colle (7) soit recueillie par au moins un segment d'extrémité de l'élément de liaison (3) situé en direction longitudinale.
